# EUROPÄISCHE PATENTSCHRIFT

(11) **EP 1 472 930 B1**
(45) Veröffentlichungstag und Bekanntmachung des Hinweises auf die Patenterteilung: **08.03.2006**
(21) Anmeldenummer: 04006034.5
(22) Anmeldetag: 13.03.2004
(51) Int. Cl.: A21D 2/02

(54) **Flüssiges Backmittel sowie Verfahren zur Herstellung von Backwaren**
Liquid baking additive and process for manufacture of baked goods
Améliorant de panification et le procédé pour la préparation de produits de boulangerie

(30) Priorität: 23.04.2003 DE 10318359
(43) Veröffentlichungstag der Anmeldung: 03.11.2004
(73) Patentinhaber: Ireks GmbH, 95326 Kulmbach (DE)
(72) Erfinder: Meyer, Bernd, Dr., 95326 Kulmbach (DE); Kunte, Thomas, Dr., 95326 Kulmbach (DE)
(74) Vertreter: Rau, Manfred

(56) Entgegenhaltungen:
- EP-A- 0 246 554
- WO-A-96/13980
- DE-A- 19 919 195
- BECKER ET AL: "Advanced use of phosphates in modern baking" FOOD REVIEW, JOHANNESBURG, SA, Bd. 24, Nr. 1, Januar 1997 (1997-01), Seiten 21-24, XP002121752 ISSN: 0257-8867

## Beschreibung

Die Erfindung betrifft ein flüssiges Backmittel mit dem Merkmalen des Oberbegriffs des Anspruchs 1 sowie ein Verfahren zur Herstellung von Backwaren nach Anspruch 12.

Backmittel erleichtern die Herstellung und verbessern die Qualität von Backwaren. Dabei werden die Teigeigenschaften, wie Elastizität, Plastizität und Gärtoleranz beziehungsweise Gärstabilität, die sensorischen Eigenschaften der Backwaren, wie Geruch und Geschmack, sowie die optischen Eigenschaften, zum Beispiel Volumen, Ausbund oder Bräunung, durch Backmittel entscheidend verbessert. Außerdem ermöglichen sie die Herstellung von Backwaren mit konstant guter Qualität durch Ausgleich der natürlich gegebenen Schwankungen in der Qualität der Rohstoffe.

Backmittel werden als Pulver, Granulate, Pasten oder Flüssigkeiten eingesetzt. Sie werden neben Mehl, Wasser, Hefe, Salz und gegebenenfalls anderen Zutaten zur Herstellung von Backwaren verwendet. Während der Einsatz von Backmitteln als Pulver weit verbreitet ist, wurde in den letzten Jahren die Nachfrage nach flüssigen Backmitteln immer größer. Dies kann durch einige Vorteile von flüssigen Backmitteln gegenüber den pulvrigen Backmitteln erklärt werden. Zum einen entstehen bei der Zugabe von pulvrigen Backmitteln häufig Stäube. Die damit verbundene Freisetzung von allergenen Stoffen kann durch die staubfreie Zugabe von Flüssigbackmitteln verhindert werden. Weiterhin lassen sich Flüssigkeiten leichter dosieren als Feststoffe, was gerade in mittleren und großen Betrieben wünschenswert ist. Die Reinigung von Maschinen und Gefäßen ist gerade bei wässrigen Lösungen gegenüber Pulvern deutlich erleichtert. Außerdem ist die Wirkung der Inhaltsstoffe der Backmittel deutlich verbessert, da sie sich nicht erst im Teig auflösen müssen, um wirken zu können, sondern bereits in gelöster Form zugegeben werden und so unmittelbar ihre Wirkung entfalten können. Auch bei Backmitteln in Granulatform befinden sich die Backmittelkomponenten zwar in einer nicht staubenden, jedoch ungelösten Form. Außerdem ist die Herstellung von Granulaten gegenüber der Herstellung von Lösungen mit einem erheblichen Mehraufwand verbunden.

Bei sehr vielen flüssigen Backmitteln handelt es sich um eine Dispersion von Feststoffen in einem Öl. So wird beispielsweise in der EP 0 421 510 A1 eine Dispersion fester Fettpartikel in Öl beschrieben. Enzyme zur Verbesserung einer Backware, in diesem Fall eines Brotes, werden beispielsweise in einem Backmittel auf Pflanzenölbasis in der EP 0 572 051 A1 verwendet. Bei den bekannten flüssigen Backmitteln auf Ölbasis wird jedoch die Sedimentation von Feststoffen nach einiger Zeit oder der Übergang von einer flüssigeren Lösungsform zu einer Paste als Problem beschrieben. Auch neuere Veröffentlichungen befassen sich weiterhin mit diesen Problemen. Die EP 1 236 400 A2 beschreibt beispielsweise die Möglichkeit, durch die Zugabe eines höher schmelzenden Fettes und von gehärteten Mono- und Diglyceriden eine Sedimentation der Feststoffe zu vermeiden. Problematisch bei Flüssigbackmitteln auf Ölbasis sind jedoch auch die erhöhten Kosten durch Öl als flüssige Phase und schwer zu entfernende Verunreinigungen durch Ölrückstände. Außerdem ist ein hoher Öl- und Fettgehalt vor allem aus ernährungsphysiologischer Sicht nicht immer erwünscht.

Deswegen wurden auch bereits Versuche unternommen, flüssige Backmittel auf Wasserbasis herzustellen. Eine Suspension von bis zu 40 % Feststoff in Wasser beschreibt die WO 96/13980. Problematisch hierbei ist jedoch die Instabilität des Backmittels. Die Feststoffe setzen sich bereits nach kurzer Zeit ab und für eine mikrobiologische Unbedenklichkeit des Produktes ist eine Kühlung nötig. Ein weiterer flüssiger Backzusatz wird in der DE 199 19 195 A1 beschrieben. Hierbei werden Verdickungsmittel, Säuren oder Mineralien, Zuckerstoffe, Fette oder Öle, Emulgatoren, Malzextrakt, Ascorbinsäure, Cystein und Wasser gemischt und homogenisiert. Wie sich gezeigt hat, ist die Haltbarkeit eines derartigen Backzusatzes jedoch gering und zudem kann auch hier eine Sedimentation des so hergestellten Backmittels erfolgen. Eine flüssige Zusammensetzung aus Enzymen, Ascorbinsäure und Polyolen wird in der WO 02/26044 beschrieben. Die Stabilisierung der enthaltenen Ascorbinsäure erfolgt mit Hilfe von Sorbitol oder Glycerin als Polyolkomponente. Die Zugabe von Sorbitol oder Glycerin von mehr als 10 % ist aus wirtschaftlichen Gründen kaum zu vertreten.

Die EP 0 246 554 A2 beschreibt ein pulverförmiges Backmittel, welches einen pastenförmigen Backemulgator enthält.

Ein flüssiges Backmittel mit den Merkmalen des Oberbegriffs des Anspruchs 1 ist vom Markt her bekannt. Auch dieses Backmittel hat im Bezug auf seine Haltbarkeit und auch auf seine Backwirksamkeit noch Verbesserungsbedarf.

Es ist daher die Aufgabe der vorliegenden Erfindung, ein flüssiges Backmittel der eingangs genannten Art derart weiterzubilden, dass eine bessere Haltbarkeit und zudem noch möglichst eine bessere Backwirksamkeit resultiert.

Diese Aufgabe ist erfindungsgemäß gelöst durch ein Backmittel mit den im Anspruch 1 genannten Merkmalen.

Bei einer derartigen Zusammensetzung wird auf die Zugabe von Ölen, Fetten, Emulgatoren oder Verdickungsmitteln verzichtet. Es resultiert ein flüssiges Backmittel, welches über mehrere Monate bei Raumtemperatur stabil und mikrobiologisch einwandfrei ist, sodass auf eine Kühlung der Lösung verzichtet werden kann. Eine Sedimentation von Feststoffen tritt nicht auf. Auch die von Anfang an gute Backwirkung des flüssigen Backmittels verändert sich über mehrere Monate Lagerzeit nicht. Die Ascorbinsäure wird zugegeben, um die Kleberstruktur des Teiges zu stabilisieren. Ohne Ascorbinsäure lassen die Teige häufig nach und werden weich. In wässrigen Lösungen zerfällt die Ascorbinsäure in der Regel mit der Zeit. Bei dem erfindungsgemäßen Backmittel ist dieser Prozess derart verlangsamt, dass die Backwirkung nach mehreren Monaten praktisch noch konstant und damit ausreichend gut ist. Die erhöhte Stabilität der Ascorbinsäure in diesen Lösungen ist durch die stabilisierende Wirkung der enthaltenen Zucker und der Phosphatsalze zu erklären. Die Enzyme können die Gebäckqualität entscheidend verbessern. Enzyme katalysieren Veränderungen an Mehlinhaltsstoffen und führen so beispielsweise zu einem partiellen Stärkeabbau und der damit verbundenen Bildung von Mono-, Di- und Oligosacchariden, die dann wiederum als Hefenahrung dienen und den Geschmack positiv beeinflussen. Durch den oder die Zucker sowie durch das mindestens eine Phosphatsalz kann die wässrige Lösung stabilisiert werden. Durch die enthaltenen Phosphatsalze erfolgt eine besonders wirksame Stabilisierung der Lösung. Durch diese Salze kann ein geeigneter pH-Wert der Lösung eingestellt werden, bei dem sowohl die Backwirkung als auch die Stabilität des flüssigen Backmittels in einem optimalen Bereich liegen. Die Mineralsalze dienen zudem als Hefenahrung und beeinflussen die Gebäckqualität positiv.

Als Phosphatsalz werden wasserlösliche Natrium- und/oder Kaliumsalze, also Natriumphosphat und/oder Kaliumphosphat, eingesetzt. Insbesondere bei einem Gewichtsanteil zwischen 0,1 und 50 Gew.-% ist der Einfluss dieser Phosphatsalze auf die Haltbarkeit sowie auf die Backwirksamkeit sehr positiv.

Die Viskosität des flüssigen Backmittels kann so eingestellt sein, dass dieses pumpfähig ist. Dies erleichtert den Einsatz des flüssigen Backmittels in einer industriellen Anwendung bei der Herstellung von Backwaren.

Bevorzugt sind die im flüssigen Backmittel enthaltenen Zucker entweder Glucose oder Saccharose oder ein Gemisch aus beiden. Weiterhin können alternativ oder zusätzlich zu den eingesetzten Zuckern auch Gemische eingesetzt werden, die einen oder beide der oben beschriebenen Zucker enthalten, wie zum Beispiel Glucosesirup oder Malzextrakt. Insbesondere eine erhöhte Konzentration von Zuckern führt zu einer Stabilisierung der in der Lösung enthaltenen Enzyme. Die Zucker beeinflussen dabei auch die Gebäckqualität positiv. Einerseits führen sie zu einem guten, süßlichen Geschmack und andererseits zu einer angenehmen Bräunung und dienen gleichzeitig als Hefenahrung, was zu einer gelockerten Krume und einem vergrößerten Volumen der Gebäcke führt.

Ein Gesamtzuckergehalt zwischen 5 und 80 Gew.-% hat sich hierbei als besonders vorteilhaft erwiesen.

Neben den Phosphatsalzen können noch weitere wasserlösliche Salze, insbesondere Natriumdiacetat, Kochsalz oder weitere Mineralsalze enthalten sein. Durch den Einsatz von Natriumdiacetat wird die mikrobiologische Haltbarkeit der Lösungen weiter erhöht. Durch Zugabe von zwischen 0,1 und 2 Gew.-% Natriumdiacetat wird die Haltbarkeit des flüssigen Backmittels weiter erhöht und der pH-Wert entsprechend angepasst. Um eine flüssige Dosierung des Backmittels effektiver zu gestalten, kann dieses auch noch das zur Herstellung von Backwaren benötigte Kochsalz teilweise oder vollständig enthalten.

Ein Gesamtsalzgehalt zwischen 1 und 70 Gew.-% ist zur Stabilisierung besonders bevorzugt.

Ein Ascorbinsäuregehalt zwischen 0,01 und 5 Gew.-% hat sich zur Erreichung einer guten Stabilisierungswirkung für die Kleberstruktur des Teiges als ausreichend erwiesen.

Besonders als zur Verbesserung der Gebäckqualität geeignet haben sich spezielle Enzyme erwiesen, nämlich α-Amylasen, β-Amylasen, Amyloglucosidasen, Lipasen, Lipoxygenasen, Phospholipasen, Proteasen, Transglutaminasen, Cellulasen, Hemicellulasen, Xylanasen, Arabinofuranosidasen und/oder Glucose- beziehungsweise Hexose-Oxidasen. Das erfindungsgemäße flüssige Backmittel kann eine Enzymmixtur mit einem oder mehreren der oben aufgeführten Enzyme enthalten.

Bevorzugt beträgt der Gesamtanteil der Enzyme am flüssigen Backmittel zwischen 0,01 und 5 Gew.-%. Die Enzyme werden bevorzugt in einer entsprechenden löslichen Form in das flüssige Backmittel gegeben, da sich die häufig üblichen Trägerstoffe aus Mehl oder Stärke nachteilig auf die Haltbarkeit der Lösung auswirken können. Es ist daher bevorzugt, auf die Trägerstoffe Mehl oder Stärke beim erfindungsgemäßen flüssigen Backmittel völlig zu verzichten.

Neben Wasser können auch Glucosesirup und/oder Malzextrakt als wässrige Lösungsmittel beim flüssigen Backmittel eingesetzt sein. Hierbei übernimmt dann schon das wässrige Lösungsmittel Funktionen, die ansonsten erst durch Zugabe weiterer Inhaltsstoffe erreicht werden können.

Eine weitere Aufgabe der vorliegenden Erfindung ist es, ein Verfahren zur Herstellung von Backwaren, insbesondere für den industriellen Einsatz, zu optimieren.

Diese Aufgabe ist erfindungsgemäß gelöst durch ein Verfahren mit den im Anspruch 12 genannten Schritten.

Durch dieses Herstellungsverfahren können Backwaren aller Art, wie zum Beispiel Brot, Brötchen oder Feingebäck, durch Einsatz des erfindungsgemäßen Backmittels hergestellt werden. Es ist sowohl eine effektive Herstellung von Frischware als auch die Herstellung von Backwaren mit Techniken, wie Gärverzögerung oder Gärunterbrechung, sowie jede Art von Langzeitführung möglich. Auch zur Herstellung von Halbgebackenem eignet sich das obige Backmittel. Das Backmittel wird dem Teig bevorzugt in einer Anwendungsmenge zwischen 1 % und 4 % des Mehlgewichts zugegeben.

Bei der Teigbereitung können beim Mischen des Teiges noch eine zusätzlich benötigte Menge Salz sowie vorzugsweise noch weitere Zutaten zugegeben werden. Dies vereinfacht die inhaltliche Zusammensetzung des flüssigen Backmittels.

### Beispiel:

Ein flüssiges Backmittel wird durch Einrühren von Zucker, Phosphatsalz und Ascorbinsäure in Wasser und anschließende Zugabe der löslichen Enzyme mit darauf folgendem Homogenisieren hergestellt. Das Backmittel wird bei Raumtemperatur in verschlossenen Gefäßen gelagert. Es weist folgende Zusammensetzung auf (Angaben in Gewichtsprozent):
- 30 % Zucker,
- 10 % Natriumphosphate (E339) und Kaliumphosphate (E340),
- 0,5 % Natriumdiacetat (E262),
- 0,2 % Ascorbinsäure (E300),
- 1,3 % Enzyme,
- 58 % Wasser.

Die Herstellung der Backwaren erfolgt nach Zugabe des Backmittels zu Mehl, Wasser, Hefe sowie gegebenenfalls der zusätzlich benötigten Menge Salz und gegebenenfalls weiteren Zutaten. Das Backmittel wird in einer Anwendungsmenge im Bereich zwischen 1 % und 4 % bezogen auf das Mehlgewicht zugegeben. Die Weiterverarbeitung des so erzeugten Teigs zu Backwaren ist wohlbekannt.

## Patentansprüche

1. Flüssiges Backmittel auf Basis einer wässrigen Lösung mit folgenden wasserlöslichen Inhaltsstoffen:
- Zucker,
- Salz,
- Ascorbinsäure,
- Enzyme,
**dadurch gekennzeichnet, dass** das Backmittel öl-, fett- und emulgatorfrei ist und dass als Salz Natriumphosphat und/oder Kaliumphosphat enthalten ist.

2. Backmittel nach Anspruch 1, **dadurch gekennzeichnet, dass** es eine Viskosität der Art aufweist, dass es pumpfähig ist.

3. Backmittel nach Anspruch 1 oder 2, **dadurch gekennzeichnet, dass** als Zucker Glucose und/oder Saccharose, vorzugsweise zusätzlich noch Malzextrakt und/oder Glucosesirup enthalten sind.

4. Backmittel nach einem der Ansprüche 1 bis 3, **gekennzeichnet durch** einen Gesamtzuckergehalt zwischen 5 und 80 Gew.%.

5. Backmittel nach einem der Ansprüche 1 bis 4, **gekennzeichnet durch** weitere wasserlösliche Salze, insbesondere Natriumdiacetat, Kochsalz oder weitere Mineralsalze.

6. Backmittel nach einem der Ansprüche 1 bis 5, **gekennzeichnet durch** einen Gesamtsalzgehalt zwischen 1 und 70 Gew.-%.

7. Backmittel nach einem der Ansprüche 1 bis 6, **gekennzeichnet durch** einen Ascorbinsäuregehalt zwischen 0,01 und 5 Gew.-%.

8. Backmittel nach einem der Ansprüche 1 bis 7, **dadurch gekennzeichnet, dass** als Enzyme α-Amylasen, β-Amylasen, Amyloglucosidasen, Lipasen, Lipoxygenasen, Phospholipasen, Proteasen, Transglutaminasen, Cellulasen, Hemicellulasen, Xylanasen, Arabinofuranosidasen und/oder Glucose- beziehungsweise Hexose-Oxidasen eingesetzt sind.

9. Backmittel nach einem der Ansprüche 1 bis 8, **gekennzeichnet durch** einen Enzymgehalt zwischen 0,01 und 5 Gew.-%.

10. Backmittel nach einem der Ansprüche 1 bis 9, **gekennzeichnet durch** Wasser, Glucosesirup und/oder Malzextrakt als wässriges Lösungsmittel.

11. Verfahren zur Herstellung von Backwaren, **gekennzeichnet durch** folgende Schritte:
- Herstellen eines Backmittels nach einem der Ansprüche 1 bis 10,
- Mischen des Backmittels mit Mehl, Wasser, Hefe zu einem Teig und
- Weiterverarbeiten des so erzeugten Teigs zu den Backwaren.

12. Verfahren nach Anspruch 11, **dadurch gekennzeichnet, dass** beim Mischen des Teiges eine noch zusätzlich benötigte Menge Salz sowie vorzugsweise noch weitere Zutaten zugegeben werden.

## Revendications

1. Agent de panification liquide à base d'une solution aqueuse avec les substances hydrosolubles suivantes :
- sucre,
- sel,
- acide ascorbique,
- enzymes,
**caractérisé en ce que** l'agent de panification est exempt d'huile, de graisse et d'émulsionnant et **en ce que** le sel contenu est le phosphate de sodium et/ou le phosphate de potassium.

2. Agent de panification selon la revendication 1, **caractérisé en ce qu'**il présente une viscosité telle qu'il soit apte au pompage.

3. Agent de panification selon la revendication 1 ou 2, **caractérisé en ce que** le sucre contenu est le glucose et/ou le saccharose, de préférence en plus encore de l'extrait de malt et/ou du sirop de glucose.

4. Agent de panification selon l'une quelconque des revendications 1 à 3, **caractérisé par** une teneur totale en sucres entre 5 et 80% en poids.

5. Agent de panification selon l'une quelconque des revendications 1 à 4, **caractérisé par** d'autres sels hydrosolubles, en particulier le diacétate de sodium, le sel de cuisine ou d'autres sels minéraux.

6. Agent de panification selon l'une quelconque des revendications 1 à 5, **caractérisé par** une teneur totale en sels entre 1 et 70% en poids.

7. Agent de panification selon l'une quelconque des revendications 1 à 6, **caractérisé par** une teneur en acide ascorbique entre 0,01 et 5% en poids.

8. Agent de panification selon l'une quelconque des revendications 1 à 7, **caractérisé en ce que** l'on utilise comme enzymes des α-amylases, des β-amylases, des amyloglucosidases, des lipases, des lipoxygénases, des phospholipases, des protéases, des transglutaminases, des cellulases, des hémicellulases, des xylanases, des arabinofuranosidases et/ou des oxydases de glucose ou d'hexose.

9. Agent de panification selon l'une quelconque des revendications 1 à 8, **caractérisé par** une teneur en enzymes entre 0,01 et 5% en poids.

10. Agent de panification selon l'une quelconque des revendications 1 à 9, **caractérisé par** de l'eau, du sirop de glucose et/ou de l'extrait de malt comme solvant aqueux.

11. Procédé de fabrication de produits de boulangerie **caractérisé par** les étapes suivantes :
- fabrication d'un agent de panification selon l'une quelconque des revendications 1 à 10,
- mélange de l'agent de panification à de la farine, de l'eau et de la levure pour former une pâte, et
- travail de la pâte ainsi produite pour former les produits de boulangerie.

12. Procédé selon la revendication 11, **caractérisé en ce que**, lors du mélange de la pâte, on ajoute une quantité additionnelle encore requise de sel ainsi que, de préférence, encore d'autres ingrédients.

## Claims

1. Liquid baking additive based on an aqueous solution comprising the following water-soluble ingredients:
- sugar,
- salt,
- ascorbic acid,
- enzymes,
**characterised in that** the baking additive is free from oil, fat and emulsifier, and **in that** it contains sodium phosphate and/or potassium phosphate as the salt.

2. Baking additive according to claim 1, **characterised in that** said baking additive has a viscosity such that it is pumpable.

3. Baking additive according to claim 1 or 2, **characterised in that** said baking additive contains glucose and/or sucrose, and preferably also malt extract and/or glucose syrup as the sugar.

4. Baking additive according to any one of claims 1 to 3, **characterised by** a total sugar content of between 5 and 80 % by weight.

5. Baking additive according to any one of claims 1 to 4, **characterised by** further water-soluble salts, in particular sodium diacetate, common salt or other mineral salts.

6. Baking additive according to any one of claims 1 to 5, **characterised by** a total salt content of between 1 and 70 % by weight.

7. Baking additive according to any one of claims 1 to 6, **characterised by** an ascorbic acid content of between 0.01 and 5 % by weight.

8. Baking additive according to any one of claims 1 to 7, **characterised in that** α-amylases, β-amylases, amyloglucosidases, lipases, lipoxygenases, phospholipases, proteases, transglutaminases, cellulases, hemicellulases, xylanases, arabinofuranosidases and/or glucose-oxidases or hexose-oxidases are used as enzymes.

9. Baking additive according to any one of claims 1 to 8, **characterised by** an enzyme content of between 0.01 and 5 % by weight.

10. Baking additive according to any one of claims 1 to 9, **characterised by** water, glucose syrup and/or malt extract as aqueous solvent.

11. Process for the production of baked goods, **characterised by** the following steps:
- producing a baking additive according to any one of claims 1 to 10,
- mixing the baking additive with flour, water and yeast to form a dough and
- further processing the dough produced in this manner to form the baked goods.

12. Process according to claim 11, **characterised in that**, while the dough is being mixed, an additionally required quantity of salt, and preferably other ingredients are added.
